# EUROPÄISCHE PATENTSCHRIFT

(11) **EP 1 675 717 B1**
(45) Veröffentlichungstag und Bekanntmachung des Hinweises auf die Patenterteilung: **28.02.2007**
(21) Anmeldenummer: 04766225.9
(22) Anmeldetag: 15.07.2004
(51) Int. Cl.: B29D 30/30, B29D 30/24, B60C 9/22

(54) **VERFAHREN ZUR HERSTELLUNG EINER GÜRTELBANDAGE EINES FAHRZEUGLUFTREIFENS**
METHOD FOR THE PRODUCTION OF A BELT ASSEMBLY OF A VEHICLE TYRE
PROCEDE POUR PRODUIRE UN BANDAGE DE CEINTURE D'UN PNEU DE VEHICULE

(30) Priorität: 11.10.2003 DE 10347327
(43) Veröffentlichungstag der Anmeldung: 05.07.2006
(73) Patentinhaber: Continental Aktiengesellschaft, 30165 Hannover (DE)
(72) Erfinder: BRANDT, Holger, 30982 Pattensen (DE); LUBITZ, Frank, 31867 Lauenau (DE)
(74) Vertreter: Finger, Karsten
(86) Internationale Anmeldenummer: PCT/EP2004/051495
(87) Internationale Veröffentlichungsnummer: WO 2005/037531

(56) Entgegenhaltungen:
- EP-A- 0 978 396
- US-A- 4 846 907
- US-A1- 2001 008 158
- PATENT ABSTRACTS OF JAPAN Bd. 0144, Nr. 60 (M-1032), 4. Oktober 1990 (1990-10-04) & JP 2 184424 A (TOYO TIRE & RUBBER CO LTD), 18. Juli 1990 (1990-07-18)

## Beschreibung

Die Erfindung betrifft ein Verfahren zur Herstellung einer Gürtelbandage eines Fahrzeugluftreifens durch schraubenförmiges Wickeln zumindest eines kontinuierlich geförderten, zumindest einen Festigkeitsträger aufweisenden Bandagenbandes auf ein Gürtelpaket eines Fahrzeugluftreifens, welches auf einer Aufbautrommel aufgebaut worden ist.

Es ist bekannt, eine Gürtelbandage mit variierender Spannung auf das Gürtelpaket bei der Herstellung des Reifens aufzuwickeln. Aus der EP 0 288 609 B1 ist eine entsprechende Vorrichtung bekannt, welche zumindest eine Bremsrolle aufweist, die über eine elektromagnetische Bremse gesteuert wird, sodass sich eine entsprechende Zugkraft am Bandagestreifen in Folge der an die Bremsrolle angelegten, durch die elektromagnetische Bremse erzeugten Bremskraft einstellt. Darüber hinaus besitzt diese bekannte Vorrichtung Sensoren zum Erfassen der jeweilen Wickelposition durch Bestimmen der Position der Streifenführungelemente. Über ein Programm können die elektromagnetischen Bremsen derart gesteuert werden, dass die über die Bremsrollen auf den Bandagestreifen wirkenden Zugkräfte an den axial äußeren Endbereichen der Trommel größer sind als im Zenitbereich. Dabei kann auch eine schrittweise oder eine kontinuierliche Erhöhung der Zugkräfte eingestellt werden. Das Programm kann ferner auf den jeweils aufzubauenden Reifen, auf Wicklungsart sowie auf die Reifenaufbautrommel abgestimmte Parameter berücksichtigen. Diese bekannte Vorrichtung gestattet daher das Aufbringen der Spulbandage mit unterschiedlicher Spannung, insbesondere mit einer höheren Spannung im Bereich der Gürtelkanten bzw.

Reifenschultern, um ein unerwünschtes Durchmesserwachstum des Reifens bei hohen Geschwindigkeiten in diesen Bereichen zu verhindern.
Die US2001/008158A1, die JP2184424A und das "Patent Abstract of Japan Bd. 0144, Nr. 60 (M-1032), die US-A- 4846907 und die EP-A-0978396 zeigen weitere Verfahren oder Vorrichtungen zur Herstellung von Fahrzeugreifen.

Der Erfindung liegt die Aufgabe zu Grunde, auf eine exaktere und einfachere Weise sicherzustellen, dass die Spannung der gespulten Bandage im fertigen Reifen an bestimmten Stellen höher ist.

Diese Aufgabe wird erfindungsgemäß dadurch gelöst, dass in Abhängigkeit von der Position des Bandagenbandes oder der Bandagenbänder während des Wickelvorganges der Durchmesser der Aufbautrommel verändert wird.

Vorteilhafte weiter bildungen der Erfindung sind Gegenstand der abhängigen Ansprüche.

Gemäß der Erfindung ist es zum Er-zielen einer unterschiedlicher Bandagespannung über die Reifenbreite nicht mehr notwendig, gesonderte Maßnahmen bei der Zuführung des Bandagebandes vorzusehen, etwa Einrichtungen, durch welche eine Änderung der Aufzugsspannung des Bandagenbandes erfolgt. Die Erfindung gestattet zudem eine wesentlich genauere Einstellung der Bandagenspannung im fertigen Reifen. Dadurch kann Spulbandagenmaterial eingespart werden, da oft eine einzige Lage bereits die gewünschte Spannungsverteilung über die Reifenbreite aufweist und es kann Spulbandagenmaterial in beliebiger Bandbreite eingesetzt werden.

Bei einer bevorzugten Ausführungsform der Erfindung wird dabei der Durchmesser der Aufbautrommel zumindest in einem gewissen Bereich kontinuierlich geändert. Diese Maßnahme kann im Zusammenhang mit bestimmten Reifenaußenkonturen von Vorteil sein, um beispielsweise eine besonders gleichmäßige Änderung der Bandagenspannung im fertigen Reifen zu erzielen. Es kann aber auch von Vorteil sein, beispielsweise im Zusammenhang mit einem bestimmten erwünschten Spulbild oder der gewählten Laufstreifenprofilierung, den Durchmesser der Aufbautrommel stufenweise zu ändern.

Das erfindungsgemäße Verfahren kann auf zweckmäßige und rationelle Weise mittels einer zentralen Steuereinrichtung arbeiten, welche eine mindestens einen Legekopf aufweisende Legeeinrichtung und die Aufbautrommel steuert.

Von Vorteil ist ferner, das Spaltmaß zwischen der Aufbautrommel und dem Bandagenband bzw. den Bandagenbändem an die Änderung des Durchmessers der Trommel anzupassen, insbesondere um es konstant zu halten.

Um eine Änderung der Außendurchmessers der Aufbautrommel durchzuführen kann diese in zweckmäßiger Weise derart aufgebaut sein, dass sie aus in radialer Richtung ein- und außfahrbaren Segmenten besteht bzw. solche aufweist.

Weitere Vorteile und Einzelheiten der Erfindung werden anhand der Zeichnung, die schematisch ein Ausführungsbeispiel darstellt, näher beschrieben. Dabei zeigen
Fig. 1 einen Teilquerschnitt durch einen Fahrzeugluftreifen,
Fig. 2 eine Ansicht eines Bandagenbandes und
Fig. 3 eine prinzipielle Darstellung einer erfindungsgemäßen Vorrichtung zur Herstellung einer Gürtelbandage.

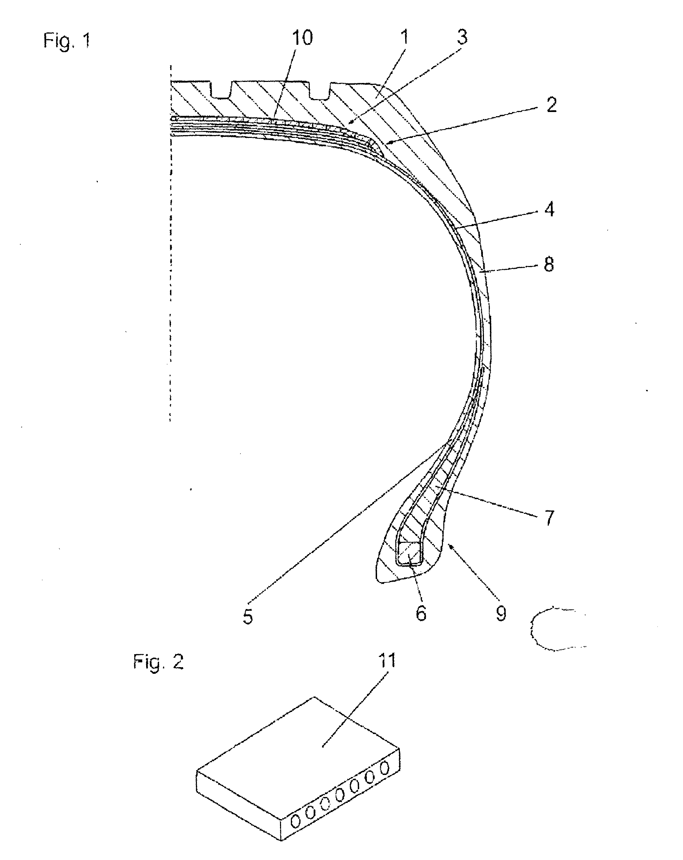

Der in Fig.1 gezeigte, hier beispielhaft für Personenkraftwagen vorgesehene Fahrzeugluftreifen weist einen profilierten Laufstreifen 1, einen zweilagigen Gürtel 2, eine Gürtelbandage 3, eine insbesondere einlagige Karkasslage 4, Wulstbereiche 9 mit Wulstkernen 6 und Wulstkernprofilen 7, Seitenwände 8 und eine luftdichte Innenschicht 5 auf. Die zwei Lagen des Gürtels 2 können in herkömmlicher Weise ausgeführt sein und insbesondere jeweils aus im Gummi eingebetteten Stahlcorden, die in jeder Lage parallel zueinander verlaufen, bestehen, wobei sich die Stahlcorde in den beiden Lagen kreuzen. Der Winkel, den die Stahlcorde mit der Umfangsrichtung des Reifens einschließen, wird üblicherweise im Bereich von 15 **°** bis 30 **°** gewählt. Die Gürtelbandage 3 ist eine Spulbandage, bei der zumindest ein Bandagestreifen 10 um den Gürtel 2 spiralförmig gewickelt ist. Bei der dargestellten Ausführung besteht die Bandage 3 aus einer Lage eines Stoß an Stoß gewickelten Bandagestreifens 10. Die Bandage 3 überdeckt den Gürtel 2 über dessen gesamte Breite.

Die Bandage 3 kann auch aus mehreren Bandagenstreifen bestehen, sie kann ferner überlappend gewickelt sein oder mit einem Spalt zwischen den einzelnen Wickelungen. Auch Ausführungen mit zwei oder mehr Lagen übereinander sind möglich.

Wie Fig. 2 zeigt ist das Ausgangmaterial des Bandagestreifens 10 ein Bandagenband 11 aus einer Kautschukmischung, in welches in Längsrichtung verlaufend Festigkeitsträger, beispielsweise Nylonfäden oder Stahlfäden, eingebettet sind. Pro cm Bandbreite sind mehrere, insbesondere sieben bis zwölf Fäden, vorgesehen. Das Bandagenband 11 weist üblicherweise eine Breite von 10 bis 15 mm auf.

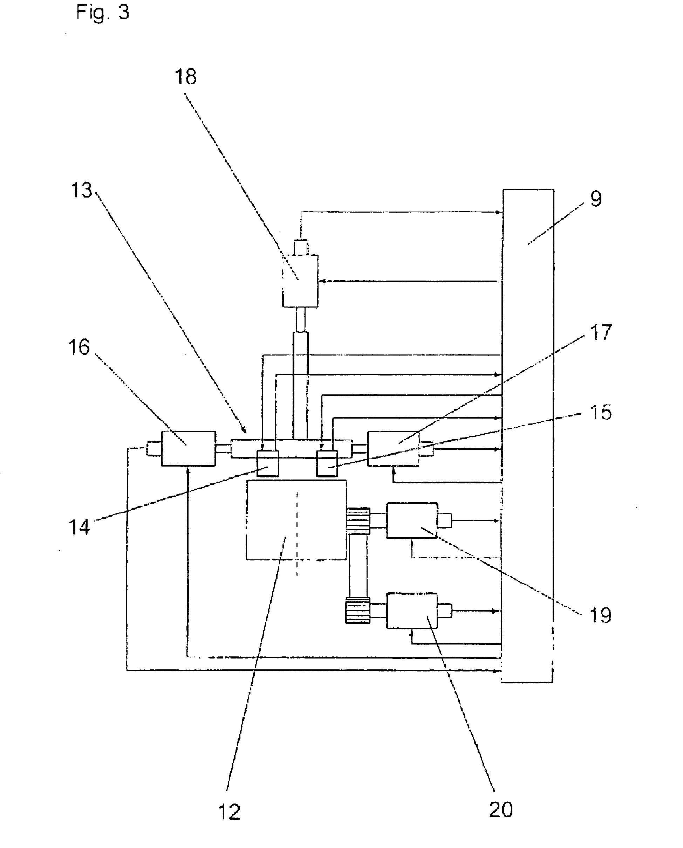

Der Reifen wird beispielsweise in einem zweistufigen Verfahren hergestellt, bei dem zunächst die sogenannte Reifenkarkasse, welche zumindest aus der Innenschicht 5, der bzw. den Karkasslagen 4 und den Kernen 2 mit Wulstkernprofilen 7 besteht, in bekannter und nicht dargestellter Weise aufgebaut wird. Das Gürtel/Laufstreifenpaket mit dem Gürtel 2, der Gürtelbandage 3 und dem Laufstreifen 1 wird unabhängig von der Reifenkarkasse auf einer Gürtelaufbautrommel 12 erstellt, welche in Fig. 3 gezeigt ist. Das fertige GürteIILaufstreifenpaket wird zur Reifenkarkasse transportiert und nach Entfernen von der Gürtelaufbautrommel in ebenfalls bekannter, nicht dargestellter Weise auf der Reifenkarkasse konzentrisch positioniert. Durch eine radiale Expansion der Reifenkarkasse werden diese und das Gürtel/Laufstreifenpaket miteinander verbunden. Der fertig hergestellte Reifenrohling wird in einer Vulkanisationsform zum fertigen Reifen vulkanisiert.

Fig. 3 veranschaulicht den prinzipiellen Aufbau einer Ausführung einer erfindungsgemäßen und zum Herstellen der Bandage 3 vorgesehenen Vorrichtung. Die Vorrichtung weist eine Legeeinrichtung 13 auf, welche zwei Legeköpfe 14, 15 zur Zuführung von Bandagenbändern 11 auf das Gürtelpaket aufweist. Die beiden Legeköpfe 14 ,15 sind mittels Antriebseinrichtungen 16 ,17 in axialer Richtung bewegbar. Die Legeeinrichtung 13 ist ferner mittels einer Verstelleinrichtung 18 in vertikaler Richtung bewegbar und verstellbar. Die Gürtelaufbautrommel 12 ist derart ausgeführt, dass ihr Durchmesser vergrößert oder verkleinert werden kann. Dies kann beispielsweise dadurch erfolgen, dass die Aufbautrommel 12 aus einer Vielzahl von Umfangssegmenten aufgebaut ist, die zur Veränderung des Durchmessers der Trommel beispielsweise pneumatisch oder elektromotorisch betätigt in radialer Richtung bewegbar sind. Mit 19 ist die Antriebseinrichtung zur Änderung bzw. Verstellung des Durchmessers der Aufbautrommel 12 bezeichnet, 20 bezeichnet die Antriebseinrichtung, welche die Aufbautrommel 12 in Rotation versetzt. Über die beiden Legeköpfe 14 ,15 können zwei Bandagenbänder 11, beispielsweise jeweils beginnend bei der Äquatorebene der Trommel und vorzugsweise Stoß an Stoß spiralig in Richtung zu den Trommelaußenseiten auf das bereits aufgebrachte Gürtelpaket gewickelt werden. Mittels einer zentralen Steuereinrichtung 21 werden die Bewegungen der einzelnen beteiligten Verstelleinrichtungen 16, 17, 18, 19, 20 aufeinander abgestimmt, um, in Abhängigkeit von der axialen Position der beiden Legeköpfe 14, 15 den Durchmesser der Gürtelaufbautrommel 12 beispielsweise derart zu verändern, dass mit zunehmender Entfernung der über die Legeköpfe 14 ,15 gewickelten Bandagenbänder 11 von der Äquatorebene der Aufbautrommel 12 der Trommeldurchmesser mehr und mehr verringert wird. Die Änderungen des Trommeldurchmessers können sowohl kontinuierlich als auch stufenweise erfolgen. Derart kann die in Fig. 1 gezeigte einlagige Gürtelbandage 3 erstellt werden. Die Bandagenbänder 11 werden insbesondere mit gleichbleibender Kraft bzw. Spannung aufgebracht, wobei an den Bereichen, wo im fertigen Reifen eine höhere Spannung sein soll, mit geringerem Durchmesser gewickelt wird. Eine erwünschte höhere Spannung der Spulbandage in diesen Bereichen, beispielsweise den Schulterbereichen, des fertigen vulkanisierten Reifens stellt sich durch das Ausformen in der Vulkanisationsform ein. Dies gestattet einen einfacheren Aufbau der Legeeinrichtung, da mit konstanter Aufzugskraft gearbeitet werden kann. Es kann ferner die Trommel im Leichtbau und damit dynamischer ausgeführt werden, da keine Bandagenlast beim Reifenaufbau auftritt. Damit verbunden sind ein Zykluszeitgewinn und eine Kostenreduktion.

Beim erfindungsgemäßen Verfahren können ferner beliebige Bandagenmaterialien beliebiger Breite verwendet werden. Schon mit einer einzigen Bandagenlage lässt sich die Spannung sehr gezielt einstellen. Das spart Spulbandagenmaterial.

Die gesamte Legeeinrichtung 13 kann ferner derart angeordnet werden, dass sie der Durchmesseränderung der Gürtelaufbautrommel folgt, sodass der Spalt zwischen der Gürtelaufbautrommel 12 und der Legeeinrichtung13 bzw. den Legeköpfen 14 ,15 konstant bleiben kann. Selbstverständlich ist es möglich, mit einer erfindungsgemäßen Vorrichtung eine Vielzahl von Spulbildern am Reifen zu erzeugen, sodass Reifen mit zwei oder drei Spulbandagenlagen hergestellt werden.

Diese Erfindung ist auch beim Einstufenverfahren, bei welchem der Gürtel, die Bandage und der Laufstreifen direkt auf der auf einer Reifenaufbautrommel erstellten Reifenkarkasse aufgebaut werden, anwendbar.

Eine ausgeführte Einrichtung kann ferner nur einen Legekopf oder auch mehr als zwei Legeköpfe aufweisen. Selbstverständlich kann auch bei der Erfindung vorgesehen werden, zusätzlich die Spannung der Bandagenbänder beim Aufbringen variieren zu können.

## Patentansprüche

1. Verfahren zur Herstellung einer Gürtelbandage eines Fahrzeugluftreifens durch schraubenförmiges Wickeln zumindest eines kontinuierlich geförderten, zumindest einen Festigkeitsträger aufweisenden Bandagenbandes (11) auf ein Gürtelpaket eines Fahrzeugluftreifens, welches auf einer Aufbautrommel (12) aufgebaut worden ist,
**dadurch gekennzeichnet,**
**dass** in Abhängigkeit von der Position des Bandagenbandes (11) oder der Bandagenbänder (11) während des Wickelvorganges der Außendurchmesser der Aufbautrommel (12) verändert wird.

2. Verfahren nach Anspruch 1, **dadurch gekennzeichnet, dass** der Durchmesser der Aufbautrommel (12) kontinuierlich geändert wird.

3. Verfahren nach Anspruch 1, **dadurch gekennzeichnet, dass** der Durchmesser der Aufbautrommel (12) stufenweise geändert wird.

4. Verfahren einem der Ansprüche 1 bis 3, **dadurch gekennzeichnet, dass** mittels einer zentralen Steuereinrichtung (21) eine mindestens einen Legekopf (14, 15) aufweisende Legeeinrichtung und die Aufbautrommel (12) gesteuert werden.

5. Verfahren einem der Ansprüche 1 bis 4, **dadurch gekennzeichnet, dass** das Spaltmaß zwischen Aufbautrommel (12) und Bandagenband (11) bzw. Bandagenbändem (11) an die jeweilige Änderung des Durchmessers der Trommel (11) angepasst wird, insbesondere konstant gehalten wird.

## Claims

1. Method for the production of a breaker belt bandage of a pneumatic vehicle tyre by helically winding at least one continuously conveyed strip (11), having at least one reinforcing element, onto a belt package of a pneumatic vehicle tyre which has been built up on a building drum (12), **characterized in that** the outside diameter of the building drum (12) is changed in dependence on the position of the strip (11) or the strips (11) during the winding operation.

2. Method according to Claim 1, **characterized in that** the diameter of the building drum (12) is changed continuously.

3. Method according to Claim 1, **characterized in that** the diameter of the building drum (12) is changed in stages.

4. Method according to one of Claims 1 to 3, **characterized in that** a laying device having at least one laying head (14, 15) and the building drum (12) are controlled by means of a central control device (21).

5. Method according to one of Claims 1 to 4, **characterized in that** the gap between the building drum (12) and the strip (11) or strips (11) is adapted to the respective change in the diameter of the drum (12), in particular is kept constant.

## Revendications

1. Procédé de fabrication d'un bandage de ceinture pour un pneu de véhicule, par enroulement en spirale d'au moins un ruban de bandage (11) apporté en continu et présentant au moins un renfort, sur un module de ceinture d'un pneu de véhicule qui a été monté sur un tambour de montage (12),
**caractérisé en ce que** le diamètre extérieur du tambour de montage (12) est modifié en fonction de la position du ou des rubans de bandage (11) pendant l'opération d'enroulement.

2. Procédé selon la revendication 1, **caractérisé en ce que** le diamètre du tambour de montage (12) est modifié de manière continue.

3. Procédé selon la revendication 1, **caractérisé en ce que** le diamètre du tambour de montage (12) est modifié par pas.

4. Procédé selon l'une des revendications 1 à 3, **caractérisé en ce qu'**un dispositif central de commande (21) commande le tambour de montage (12) et un dispositif de pose qui présente au moins une tête de pose (14, 15).

5. Procédé selon l'une des revendications 1 à 4, **caractérisé en ce que** la dimension de l'interstice entre le tambour de montage (12) et le ou les rubans de montage (11) est adaptée à tout moment à la modification du diamètre du tambour (12) et est en particulier maintenue constante.
